# EUROPÄISCHE PATENTSCHRIFT

(11) **EP 1 479 289 B1**
(45) Veröffentlichungstag und Bekanntmachung des Hinweises auf die Patenterteilung: **28.09.2005**
(21) Anmeldenummer: 04010520.7
(22) Anmeldetag: 04.05.2004
(51) Int. Cl.: A01G 27/04

(54) **Vorrichtung zur Grabbeetbewässerung**
Device for watering a grave
Dispositif d'irrigation d'un tombe

(30) Priorität: 19.05.2003 DE 10322526
(43) Veröffentlichungstag der Anmeldung: 24.11.2004
(73) Patentinhaber: Neumayer, Albert, 83435 Bad Reichenhall (DE); Dutschmann, Jochen, 83395 Freilassing (DE)
(72) Erfinder: Dutschmann, Jochen, 83395 Freilassing (DE); Neumayer, Albert, 83435 Bad Reichenhall (DE)
(74) Vertreter: Haft, von Puttkamer, Berngruber, Czybulka

(56) Entgegenhaltungen:
- DE-A- 2 427 604
- DE-A- 2 717 851
- DE-A- 10 104 811
- US-A- 665 502
- US-A- 5 426 889

## Beschreibung

Die Erfindung bezieht sich auf eine Vorrichtung zur Bewässerung eines Grabbeetes nach dem Oberbegriff des Anspruchs 1.

Insbesondere während der warmen Jahreszeit müssen vor allem mit Blumen bepflanzte Grabbeete regelmäßig gegossen werden, was mit einem erheblichen Zeit- und Arbeitsaufwand verbunden ist. Zudem kann nur zu bestimmten Tageszeiten gegossen werden, da z.B. Gießen bei starker Sonneneinstrahlung für die Pflanzen schädlich ist. Als Gießwasser wird meist Trinkwasser verwendet, das jedoch zum großen Teil verloren geht, weil es, ohne von den Blumen aufgenommen zu werden, versickert. Neben dem Trinkwasserverlust ist es aus Umweltgesichtspunkten auch nachteilig, dass Düngemittel oder sonstige Chemikalien, mit denen handelsübliche Blumen versetzt sind, in das Grundwasser gelangen.

Aus DE 24 27 604 A1 ist bereits eine Vorrichtung nach dem Oberbegriff des Anspruchs 1 bekannt. Dabei sind in die Öffnungen in der Deckplatte poröse Steinstücke eingesetzt, die auf dem Boden der Wanne aufliegen. Da die porösen Steinstücke verstopfen, funktioniert die Grabbewässerung nach einer gewissen Zeit nicht mehr. Darüber hinaus können die porösen Steinstücke, so lange sie ihre Saugkraft besitzen, zu einer unkontrolliert schnellen Entleerung der Wanne führen. Abgesehen davon, dass dadurch häufig nachgefüllt werden muss, kann dies zu einem Wasserstau an der Grabsole und damit zur Beeinträchtigung der Zersetzungsprozesse in dem Grab führen, ferner dazu, dass neben pflanzlichen Düngemitteln die zum Teil toxischen Zersetzungsprodukte und Krankheitserreger in das Grundwasser ausgetragen werden können. Nach DE 94 02 879 ist auf der Deckplatte ein Faservlies angeordnet, das durch einen Spalt zwischen der Deckplatte und der Seitenwand der Wanne nach unten in das Wasser in der Wanne hängt. Aus US 4,962,613 oder DE 27 17 851 geht ein Pflanztopf hervor, der im unteren Bereich eine Wasserkammer aufweist, die von der Erde darüber getrennt durch eine Zwischenwand ist, welche eine mit Erde gefüllte Vertiefung aufweist, um das Wasser aus der Wasserkammer anzusaugen.

Aufgabe der Erfindung ist es, für ein Friedhofsgrab eine einfach aufgebaute, umweltfreundliche Vorrichtung bereit zu stellen, mit der eine langanhaltende, zuverlässige Bewässerung des Grabbeetes gewährleistet ist.

Dies wird erfindungsgemäß durch eine Vorrichtung nach dem Anspruch 1 erreicht. In den Unteransprüchen sind vorteilhafte Ausgestaltungen der Erfindung wiedergegeben.

Nach der Erfindung weist die Deckplatte mit Erde gefüllte grabenförmige Vertiefungen auf, die in das Wasser in der Wasserwanne eintauchen und mit Öffnungen versehen sind, um das Wasser aus der Wasserwanne in die Erde des Grabbeetes auf der Deckplatte zu saugen. Die Deckplatte und die Wasserwanne bestehen vorzugsweise aus einem Kunststoffformteil, z.B. aus HDPE, also Polyethylen hoher Dichte. Da die großflächige Deckplatte dünnwandig ausgebildet ist, aber das Gewicht einer Person aufnehmen können muss, wenn z. B. zur Grabpflege auf dem Grab gearbeitet wird, stützt sich die Deckplatte mit den Vertiefungen am Boden der Wanne ab. Darüber hinaus wird die Steifigkeit durch diese graben- oder rinnenförmigen Vertiefungen erhöht, da diese wie Sicken wirken. Um die Steifigkeit durch möglichst lange grabenförmige Vertiefungen zu erhöhen, erstrecken sie sich in Längsrichtung der Wasserwanne. Vorzugsweise sind zwei oder drei sich in Längsrichtung erstreckende grabenförmige Vertiefungen in der Deckplatte vorgesehen.

Erfindungsgemäß wird die Wasserwanne in erster Linie durch Regenwasser gefüllt. Dazu ist am Umfang der Deckplatte eine nach oben ragende Kante an der Wand vorgesehen, sodass das Regenwasser nicht seitlich abfließen kann. Zum anderen sind über die Deckplatte Öffnungen verteilt, durch die das auf der Deckplatte gesammelte Regenwasser in die Wasserwanne abfließen kann.

Damit kann Trinkwasser gespart werden. Zudem ist Regenwasser als Blumenwasser zuträglicher als Leitungswasser. Ein zusätzlicher umweltfreundlicher Aspekt ist, dass Düngemittel und andere Chemikalien, mit denen handelsübliche Blumen versetzt sind, durch die Wasserwanne größtenteils zurückgehalten werden und damit nicht in das Grundwasser gelangen.

Die Öffnungen in der Deckplatte zum Ablauf des Regenwassers in die Wasserwanne dienen zugleich zur Belüftung der Erde auf der Deckplatte. Dazu sind die Öffnungen über die gesamte Deckplatte verteilt, also sowohl zwischen den grabenförmigen Vertiefungen wie zwischen den Vertiefungen und dem Rand der Deckplatte vorgesehen. Damit kein festes Material in die Wasserwanne gelangen kann, sind diese Öffnungen vorzugsweise als Sieb ausgebildet.

Wie sich gezeigt hat, kann sich die Wasserwanne unter Umständen rasch entleeren, sodass auch Wasser in Richtung Grabsole abfließen kann. Um dies zu verhindern, wird die Deckplatte mit einer Sickerschicht aus einem körnigen Material bedeckt, wobei die grabenförmigen Vertiefungen ausgespart, also nicht mit körnigem Material bedeckt werden. Das körnige Material kann insbesondere Split oder Kies, beispielsweise ein Streusplit der Körnung 5/8 sein. Falls die Erde auf der Sickerschicht einen hohen Wasseranteil aufweist, sickert durch diese Schicht ein Teil des Wassers nach unten, wodurch es über die Öffnungen in der Deckplatte in die Wasserwanne zurückfließt.

Erfindungsgemäß ist jede grabenförmige Vertiefung in der Deckplatte mit einer nach oben ragenden Umrandung oder Wand versehen, die sich auf der Deckplatte um die grabenförmige Vertiefung erstreckt. Die Höhe der Umrahmung kann z. B. 0,5 bis 3 cm betragen. Die gleiche Höhe weist vorzugsweise die nach oben ragende Kante am Umfang der Deckplatte auf. Damit wird das körnige Material der Sickerschicht einerseits auf der Deckplatte und zugleich außerhalb der grabenförmigen Vertiefungen gehalten. D.h., die gesamte Deckplatte wird vorzugsweise bis zur Oberkante der Umrahmung der grabenförmigen Vertiefungen und der nach oben ragenden Kante am Umfang der Deckplatte mit dem körnigen Material aufgefüllt.

Die Seitenwände der Wasserwanne sind im oberen Bereich mit Überlauföffnungen versehen. Die Überlauföffnungen können beispielsweise in dem nach außen ragenden Abschnitt einer Schulter vorgesehen sein, die sich im oberen Bereich um die Wasserwanne erstreckt.

Damit wird zwischen dem Wasser in der Wanne und der Deckplatte ein Luftraum gebildet. Dieser Luftraum wird über die Erde, die Sickerschicht und die Öffnungen in der Deckplatte ständig belüftet. Durch die Luftzufuhr zu dem Luftraum in der Wasserwanne kann die Bildung von Algen und Schimmel in der Wanne verhindert werden.

Die Öffnungen in den grabenförmigen Vertiefungen, durch die das Wasser aus der Wasserwanne gesaugt wird, erstrecken sich vorzugsweise von oben nach unten. Sie können dazu schlitzförmig ausgebildet sein. Um die Belüftung des Luftraumes in der Wasserwanne zu verbessern, hat es sich als vorteilhaft erwiesen, wenn sich auch die Öffnungen in den grabenförmigen Vertiefungen bis zur Höhe des Luftraumes in der Wasserwanne erstrecken.

Die Deckplatte liegt erfindungsgemäß auf dem oberen Rand der Wasserwanne auf. Damit die Deckplatte auf der Wasserwanne nicht verschoben werden kann, ist sie vorzugsweise am Umfang mit einer nach unten ragenden Kante versehen, die den oberen Rand der Wasserwanne übergreift.

Die Wasserwanne und die Deckplatte sind in der Draufsicht rechteckig ausgebildet. Die Länge der Wasserwanne kann beispielsweise 0,5 bis 1,5 Meter betragen, ihre Breite z. B. 0,3 bis 1 m und ihre Tiefe 3 bis 20 cm. Die Höhe des Luftraumes, also der Abstand zwischen der Höhe der Überlauföffnungen und der Deckplatte kann beispielsweise 0,5 bis 3 cm betragen.

Bei lang anhaltender trockener Witterung wird zum Füllen der Wasserwanne vorzugsweise wenigstens ein Füllrohr verwendet, das aus der Erde des Grabbeetes oben heraus ragt. Die Deckplatte weist dazu eine Ausnehmung auf, durch die das jeweilige Füllrohr in die Wanne gesteckt wird. Da das Füllrohr normalerweise nicht sichtbar sein soll, ist es vorzugsweise in einer Ecke der Wanne angebracht, um es z. B. hinter einem Busch oder dergleichen zu verstecken.

Das Füllrohr kann vorzugsweise an jeder Ecke der Wasserwanne angebracht werden. Dazu kann an einer Schmalseite in den beiden Eckbereichen der rechteckigen Deckplatte eine Perforation oder dergleichen Materialschwächung vorgesehen sein, um aus der Deckplatte das Material zur Bildung der Öffnung entfernen zu können. Durch das Füllrohr kann eine zusätzliche Belüftung des Luftraumes in der Wasserwanne erfolgen. Dazu kann das vorzugsweise am Boden der Wanne aufstehende Füllrohr mit Öffnungen versehen sein, die sich über die Höhe der Überlauföffnungen nach oben erstrecken. Damit bei Frost das gefrierende Wasser nicht zu einer Beschädigung der Wasserwanne führen kann, erweitern sich die Seitenwände der Wasserwanne nach oben keil- oder konusförmig nach außen. Zugleich können die Ecken im Inneren der Wasserwanne zu diesem Zweck abgerundet ausgebildet sein.

Die Wasserwanne kann sich auch nur unter einem Teil des Grabbeetes erstrecken. So weisen Grabbeete häufig einen Bereich mit Blumen und einen Bereich mit Büschen auf. Da Büsche weniger einer Bewässerung bedürfen, reicht es aus, den Bereich mit den Blumen mit der erfindungsgemäßen Vorrichtung zu versehen. Zudem wird durch einen Abstand zwischen Wasserwanne und Grabberandung der natürliche Luft- und Wasseraustausch gewährleistet, der für die Zersetzungsprozesse in einem Grab erforderlich ist.

Durch die erfindungsgemäße Vorrichtung wird die Grabbewässerung wesentlich verbessert. Ein Wasserstau an der Grabsole und damit eine Beeinträchtigung der Zersetzungsprozesse wird somit vermieden. Der Austrag von Zersetzungsprodukten sowie der Austrag von pflanzlichen Düngemitteln in das Grundwasser wird wesentlich reduziert.

Nachstehend ist eine Ausführungsform der erfindungsgemäßen Vorrichtung anhand der Zeichnung beispielhaft näher erläutert. Darin zeigen:
Figur 1 eine perspektivische Ansicht eines Friedhofgrabes mit teilweise geschnittenem Grabbeet mit einer erfindungsgemäßen Vorrichtung mit zwei grabenförmigen Vertiefungen;
Figur 2 eine Draufsicht auf die Deckplatte der erfindungsgemäßen Vorrichtung gemäß Figur 1, jedoch mit drei grabenförmigen Vertiefungen;
Figur 3 einen Schnitt entlang der Linie III-III in Figur 2, jedoch mit einer Sickerschicht;
Figur 4 eine vergrößerte Ansicht des Teils A der Figur 3.

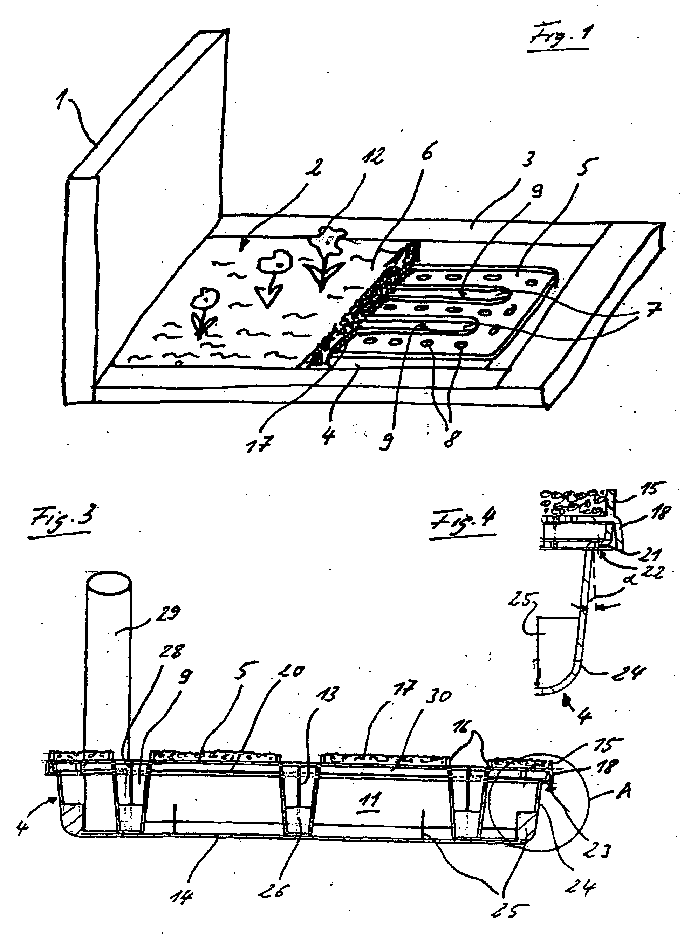

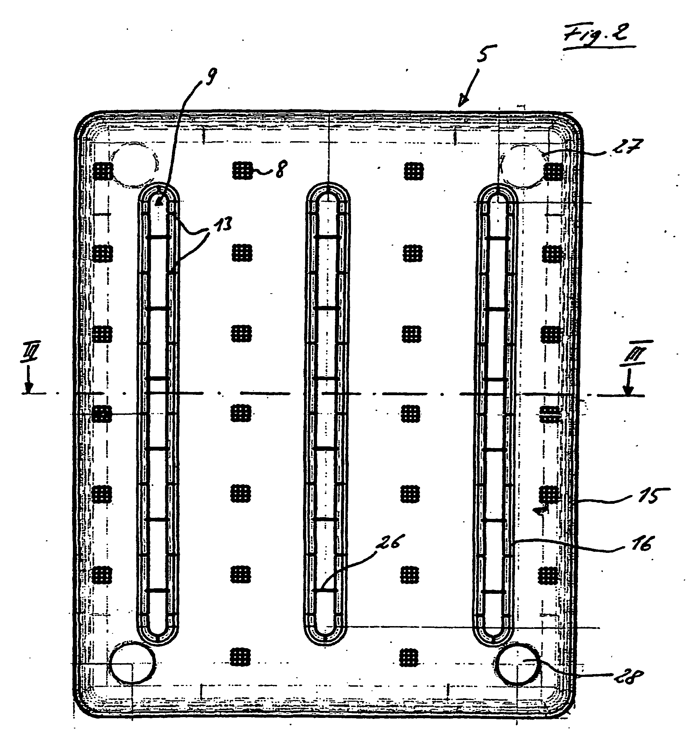

Gemäß Figur 1 weist ein Friedhofsgrab einen Grabstein 1 mit einem davor angeordneten Grabbeet 2 in einer Einfassung 3 auf. In dem Grabbeet ist mit Abstand zur Einfassung 3 eine rechteckige Wasserwanne 4 angeordnet, die durch eine Deckplatte 5 abgedeckt ist, auf der sich die Erde 6 des Grabbeetes befindet. In der rechteckigen Deckplatte 5 sind zwei Längsöffnungen 7 vorgesehen, ferner weitere Öffnungen 8, die über die Deckplatte 5 verteilt sind. Die beiden Öffnungen 7 sind durch grabenförmige Vertiefungen 9 in der Deckplatte 5 gebildet, die sich in Längsrichtung der Deckplatte 5 erstrecken. Die Vertiefungen 9 sind ebenfalls mit Erde 6 gefüllt, um das Wasser 11 (Figur 3) aus der Wasserwanne 4 in die Erde 6 auf der Deckplatte 5 zu saugen, in die Blumen 12 eingepflanzt sind. Die Vertiefungen 9 sind dazu mit sich von unten nach oben erstreckenden schlitzförmigen Öffnungen 13 versehen.

Mit den Vertiefungen 9 stützt sich die Deckplatte 5 am Boden 14 der Wasserwanne 4 ab.

Um den Umfang der Deckplatte 5 erstreckt sich eine nach oben ragende Kante 15. Ferner ist eine nach oben ragende Kante oder Umrahmung 16 um die grabenförmigen Vertiefungen 9 auf der Deckplatte 5 vorgesehen.

Wie aus Figur 1 und 3 ersichtlich, ist unter der Erdschicht 6 unter Aussparung der grabenförmigen Vertiefungen 9 auf der Deckplatte 5 eine Sickerschicht 17 aus Split oder dergleichen körnigem Material vorgesehen.

Die Deckplatte 5 liegt gemäß Figur 3 und 4 auf dem oberen Rand der Wasserwanne 4 auf und ist am Umfang mit einer nach unten ragenden Kante 18 versehen, die den oberen Rand der Seitenwand 24 der Wasserwanne 4 übergreift.

Um einen Luftraum 19 zwischen Wasser 11 und Deckplatte 5 in der Wasserwanne 4 zu bilden, sind in der Seitenwand 24 Überlauföffnungen 21 vorgesehen, und zwar in dem nach außen ragenden Abschnitt 22 einer Schulter 23, die sich um den oberen Bereich der Wasserwanne 4 erstreckt. Damit wird in der Wanne 4 maximal der Wasserstand 20 erreicht und zwischen Wasser 11 und Deckplatte 5 ein Luftraum 30 gebildet.

Die Öffnungen 8 sind, wie aus Figur 2 ersichtlich, siebförmig ausgebildet. Die Wasserwanne 4 weist gemäß Figur 3 im Bereich der Ecken zwischen dem Boden 14 und den Seitenwänden 24 Verstärkungsrippen 25 auf. Desgleichen sind in den Vertiefungen 9 quer verlaufende Stege 26 zur Verstärkung vorgesehen. Die Stege 26 sind am Boden der Vertiefungen 9 vorgesehen und weisen eine Höhe auf, die maximal der halben Höhe der Vertiefung 9 entspricht, um das Stapeln mehrerer Deckplatten 5 zur Lagerung und zum Transport zu erleichtern.

Die Seitenwände 24 der Wasserwanne 4 erweitern sich keil- oder konusförmig nach oben, d. h. sie sind gemäß Figur 4 um einen Winkel α nach außen geneigt.

Die Deckplatte 5 weist gemäß Figur 2 auf einer Schmalseite in beiden Eckbereichen eine kreisrunde Perforierung 27 oder dergleichen Materialschwächung auf, um durch Herausbrechen des Materials in einer Ecke eine Öffnung 28 zu bilden, in die gemäß Figur 3 ein Füllrohr 29 steckbar ist.

## Patentansprüche

1. Vorrichtung zur Bewässerung eines Grabbeetes, mit einer in der Draufsicht rechteckigen Wasserwanne (4), die mit einer Deckplatte (5) abgedeckt ist, auf der sich die Erde (6) des Grabbeetes befindet, wobei die Deckplatte (5) Vertiefungen (9) aufweist, die in das Wasser (11) in der Wasserwanne (4) eintauchen und mit Öffnungen (13) versehen und mit Erde (6) gefüllt sind, um das Wasser (11) aus der Wasserwanne (4) über die Erde (6) in den Vertiefungen (9) in die Erde (6) auf der Deckplatte (5) zu saugen, wobei die Deckplatte (5) sich mit den Vertiefungen (9) am Boden (14) der Wasserwanne (4) abstützt, am Umfang mit einer nach oben ragenden Kante (15) sowie mit weiteren Öffnungen (8) zur Belüftung und zum Ablauf von Wasser aus der Erde (6) auf der Deckplatte (5) in die Wasserwanne (4) versehen ist und auf dem oberen Rand der Wasserwanne (4) aufliegt und die Seitenwände (24) der Wasserwanne (4) im oberen Bereich mit Überlauföffnungen (21) versehen sind **dadurch gekennzeichnet, dass** die Vertiefungen (9) grabenförmig ausgebildet sind und sich in Längsrichtung der Wasserwanne (4) erstrecken, dass sich um die grabenförmigen Vertiefungen (9) von der Deckplatte (5) eine Umrahmung (16) nach oben erstreckt, sodass unter Aussparung der grabenförmigen Vertiefungen (9) und der Erdschicht (6) auf die Deckplatte (5) eine Sickerschicht (17) aus einem körnigen Material aufbringbar ist.

2. Vorrichtung nach Anspruch 1, **dadurch gekennzeichnet, dass** die Sickerschicht (17) aus Split oder Kies besteht.

3. Vorrichtung nach Anspruch 1, **dadurch gekennzeichnet, dass** die Überlauföffnungen (21) in dem nach außen ragenden Abschnitt (22) einer Schulter (23) vorgesehen sind, die sich um die Wasserwanne (4) erstreckt.

4. Vorrichtung nach einem der vorstehenden Ansprüche, **dadurch gekennzeichnet, dass** die Deckplatte (5) wenigstens eine Öffnung (28) zum Einsetzen eines Füllrohres (29) aufweist.

5. Vorrichtung nach einem der vorstehenden Ansprüche, **dadurch gekennzeichnet, dass** sich die Seitenwände (24) der Wasserwanne (4) nach oben keilförmig erweitern.

## Claims

1. An apparatus for irrigating a grave planting bed, having a water tub (4) which is rectangular in plan view and covered with a cover plate (5) on which the earth (6) of the grave planting bed is located, the cover plate (5) having depressions (9) which dip into the water (11) in the water tub (4) and are provided with openings (13) and filled with earth (6) in order to suck the water (11) out of the water tub (4) through the earth (6) in the depressions (9) into the earth (6) on the cover plate (5), the cover plate (5) being supported with the depressions (9) on the bottom (14) of the water tub (4), provided with an upwardly protruding edge (15) on the periphery and with further openings (8) for ventilation and for draining water from the earth (6) on the cover plate (5) into the water tub (4), and resting on the upper rim of the water tub (4), and the side walls (24) of the water tub (4) being provided with overflow openings (21) in the upper area, **characterized in that** the depressions (9) are of trough-shaped design and extend in the longitudinal direction of the water tub (4), a border (16) extends upwardly from the cover plate (5) around the trough-shaped depressions (9), so that a seepage layer (17) consisting of granular material can be applied to the cover plate (5) while leaving out the trough-shaped depressions (9) and the earth layer (6).

2. An apparatus according to claim 1, **characterized in that** the seepage layer (17) consists of stone chippings or gravel.

3. An apparatus according to claim 1, **characterized in that** the overflow openings (21) are provided in the outwardly protruding portion (22) of a shoulder (23) which extends around the water tub (4).

4. An apparatus according to any of the above claims, **characterized in that** the cover plate (5) has at least one opening (28) for insertion of a filling tube (29).

5. An apparatus according to any of the above claims, **characterized in that** the side walls (24) of the water tub (4) flare upwardly in a wedge shape.

## Revendications

1. Dispositif d'irrigation d'une plate-bande tombale, comportant une cuve à eau (4) rectangulaire en vue de dessus, qui est recouverte d'une plaque de recouvrement (5) sur laquelle se trouve la terre (6) de la plate-bande tombale, la plaque de recouvrement (5) présentant des cavités (9) qui plongent dans l'eau (11) se trouvant dans la cuve à eau (4) et qui sont pourvues d'ouvertures (13) et remplies de terre (6) pour aspirer l'eau (11) depuis la cuve à eau (4) via la terre (6) jusque dans les cavités (9) dans la terre (6) située sur la plaque de recouvrement (5), la plaque de recouvrement (5) prenant appui avec les cavités (9) sur le fond (14) de la cuve à eau (4), étant pourvue d'une arête (15) faisant saillie vers le haut ainsi que d'autres ouvertures (8) pour l'aération et pour l'évacuation d'eau depuis de la terre (6) située sur la plaque de recouvrement (5) jusque dans la cuve à eau (4), et reposant sur le bord supérieur de la cuve à eau (4), et les parois latérales (24) de la cuve à eau (4) étant pourvues d'ouvertures de débordement (21) dans la région supérieure, **caractérisé en ce que** les cavités (9) sont réalisées sous forme de tranchées et s'étendent en direction longitudinale de la cuve à eau (4), **en ce qu'**un encadrement (16) s'étend depuis la plaque de recouvrement (5) vers le haut autour des cavités (9) en forme de tranchées, de sorte que l'on peut épandre sur la plaque de recouvrement (5) une couche de drainage (17) en une matière granulée en laissant dégagées les cavités (9) en forme de tranchées et la couche de terre (6).

2. Dispositif selon la revendication 1, **caractérisé en ce que** la couche de drainage (17) est constitué par des gravillons ou par du gravier.

3. Dispositif selon la revendication 1, **caractérisé en ce que** les ouvertures de débordement (21) sont prévues dans le tronçon (22), faisant saillie vers l'extérieur, d'un épaulement (23) qui s'étend autour de la cuve à eau (4).

4. Dispositif selon l'une des revendications précédentes, **caractérisé en ce que** la plaque de recouvrement (5) présente au moins une ouverture (28) pour insérer un tube de remplissage (29).

5. Dispositif selon l'une des revendications précédentes, **caractérisé en ce que** les parois latérales (24) de la cuve à eau (4) s'élargissent vers le haut en forme de coin.
